# EUROPÄISCHE PATENTSCHRIFT

(11) **EP 2 216 242 B1**
(45) Veröffentlichungstag und Bekanntmachung des Hinweises auf die Patenterteilung: **04.04.2012**
(21) Anmeldenummer: 09405022.6
(22) Anmeldetag: 04.02.2009
(51) Int. Cl.: B62M 6/55, B62M 6/50

(54) **Antriebseinrichtung**
Drive device
Dispositif d'entraînement

(43) Veröffentlichungstag der Anmeldung: 11.08.2010
(73) Patentinhaber: Electragil GmbH, 8444 Henggart (CH)
(72) Erfinder: Schneider, Gerhard, 8444 Henggart (CH)
(74) Vertreter: Roshardt, Werner Alfred

(56) Entgegenhaltungen:
- EP-A- 1 464 937
- WO-A-00/43259
- WO-A-99/30960
- GB-A- 764 724
- GB-A- 2 312 403

## Beschreibung

### Technisches Gebiet

Die Erfindung betrifft eine Antriebseinrichtung mit einem Elektroantrieb für eine muskelkraftbetriebene Vorrichtung, insbesondere für ein Zweirad, mit einer Kurbelwelle, welche durch die Muskelkraft einer Person gedreht werden kann, mit einer Antriebshülse, welche koaxial zur Kurbelwelle gelagert ist, und welche an einem ersten axialen Abschnitt Drehmoment-übertragend mit der Kurbelwelle gekoppelt ist und an einem zweiten axialen Abschnitt Drehmoment-übertragend mit einem Kupplungselement zur Kraftübertragung an eine anzutreibende Einrichtung wie insbesondere ein Hinterrad des Zweirads gekoppelt ist, so dass die Muskelkraft der Person von der Kurbelwelle an die anzutreibende Einrichtung übertragen wird, mit einem Elektroantrieb, welcher in Wirkverbindung mit der Antriebshülse im Bereich eines dritten axialen Abschnitts ist, so dass ein Drehmoment des Elektroantriebs über die Antriebshülse auf das Kupplungselement übertragen werden kann, wobei die Antriebshülse in einer Einbauhülse gelagert ist, welche in einer Büchse eines Rahmenteils der muskelkraftbetriebenen Vorrichtung verankert werden kann.

### Stand der Technik

Pedelec (PEDal ELEctric Cycle) sind seit ca. 1994 bekannt und einem Fahrrad ähnlich. Als Grundprinzip gibt ein Elektroantrieb Leistung zur Tretkraft hinzu. Ein Pedelec unterscheidet sich von einem gewöhnlichen Fahrrad durch den zusätzlichen Elektroantrieb, einen oder mehrere Akkumulatoren, einen Sensor zur Messung des vom Fahrer eingebrachten Drehmoments oder der Drehbewegung der Pedalachse und einer Steuerungselektronik zur Steuerung des Motors. Es kann eine Anzeige für den Batterieladestand und eine Vorrichtung zur Leistungseinstellung des Elektroantriebs vorgesehen sein. Zur Krafteinspeisung durch den Elektroantrieb kann am Vorder- oder Hinterrad ein Nabenmotor angebracht sein, es kann ein Antrieb der Kette, ein Reibradantrieb oder ein Kurbelwellenmotor vorgesehen sein. Der Kurbelwellenmotor ist eingerichtet, um eine Krafteinspeisung im Wesentlichen an derselben Stelle zu bewirken, an der eine Antriebskraft von einer Kurbelwelle einer Tretvorrichtung einwirkt.

Aus der WO 99/30960 A2 ist ein Antrieb für ein Etektrofahrrad mit den Merkmalen des Oberbegriffes des Anspruchs 1 bekannt. Eine Tretachse ist an einer Stelle fest und an einer anderen Stelle drehbar mit einem Hülsenteil eines Rotors eines Elektromotors gelagert. Der Elektromotor ist koaxial in der Mitte der Tretachse angeordnet. Das Hülsenteil ist über zwei Lager am Gehäuse des Elektromotors gelagert und es ist ein Kettenrad für den Antrieb einer Fahrradkette am Hülsenteil angebracht. Durch die Einwirkung einer Muskelkraft auf die Tretachse erfolgt eine Torsion des Hülsenteils, welche zur Regelung des Elektromotors erfasst wird.

Aus der GB 2 440 132 ist ein Elektroantrieb bekannt, um ein konventionelles Fahrrad umzurüsten. Die in einem Tretlager gehaltene Achse ist auf der Seite der Kettenkränze verlängert, um ein Kettenrad anzubringen. Das Kettenrad ist über eine Einwegkupplung mit der Achse verbunden. Auf das Kettenrad kann die Antriebskraft des Elektromotors einwirken.

Aus der DE 197 32 272 ist eine Fahrradantriebseinheit mit integriertem Drehmomentsensor und Zusatzantriebsmotor bekannt. Parallel zur Tretkurbelachse ist eine Messwelle angeordnet. Die Messwelle wird auf der einen Seite über ein Antriebsritzel der Tretkurbelachse angetrieben und überträgt die Antriebskraft auf der anderen Seite auf die Achse des Kettenrades. Auf der Achse des Kettenrades sitzt weiter ein Zwischenwellenritzel, welches vom Motorenritzel des Zusatzantriebsmotors angetrieben wird. Der Zusatzantriebsmotor wird aufgrund der Torsion der Messwelle geregelt.

Es ist ein Nachteil, dass bei bestehenden Fahrradantriebseinheiten ein Eingriff in die Kettenlinie erforderlich ist respektive dass die Messung der effektiven Tretkraft des Fahrers eine komplizierte Anordnung mit einer Messwelle erfordert.

### Darstellung der Erfindung

Aufgabe der Erfindung ist es, eine dem eingangs genannten technischen Gebiet zugehörende Antriebseinrichtung mit einem Elektroantrieb für ein muskelkraftbetriebenes Fahrzeug zu schaffen, welche einfach in ein bestehendes Fahrzeug eingebaut werden kann, wobei nur unwesentliche Modifikationen am Fahrzeug vorgenommen werden müssen.

Die Lösung der Aufgabe ist durch die Merkmale des Anspruchs 1 definiert. Gemäss der Erfindung sind das Kupplungselement und der Elektroantrieb auf gegenüberliegenden Seiten der Büchse angeordnet. Mit anderen Worten sind der An- und der Abtrieb auf verschiedenen Seiten der Büchse angeordnet.

Das Kupplungselement kann insbesondere eine Adapterscheibe umfassen, an welcher ein bestehendes Kettenblatt eines Zweirads angebracht wird, beispielsweise indem das Kettenblatt an der Adapterscheibe angeschraubt wird. Die Adapterscheibe ist dem Fahrzeug entsprechend ausgestaltet, an welches die Antriebseinrichtung mit dem Elektroantrieb eingebaut wird, beispielsweise weist die Adapterscheibe einen entsprechenden Durchmesser und/oder eine dem Kettenblatt des Zweirads angepasste Form auf.

Die Einbauhülse weist bevorzugt standardisierte Dimensionen auf und kann somit ohne Modifikation an einem Fahrzeug eingebaut werden.

Alternativ besteht das Kupplungselement aus einem oder mehreren Kettenblättern. Dadurch kann beispielsweise schon bei der Produktion eines Zweirads gerade eine erfindungsgemässe Antriebsvorrichtung mit einem Elektroantrieb ausgerüstet und somit die Herstellungskosten sowie das Gewicht des Zweirads dadurch gesenkt werden.

Diese Merkmale ergeben eine einfache Austauschbarkeit einer bestehenden Antriebsvorrichtung durch die erfindungsgemässe Antriebsvorrichtung mit einem Elektroantrieb.

Vorzugsweise ist in der Einbauhülse und/oder in der Antriebshülse eine Sensorvorrichtung vorgesehen, um das von der Kurbelwelle auf die Antriebshülse wirkende Drehmoment zu ermitteln. Eine solche Anordnung der Sensorvorrichtung führt zu einer kompakten Antriebseinrichtung.

Alternativ kann die Sensorvorrichtung zwischen der Kurbelwelle und dem Muskelkraft erzeugenden Glied der Person, welche die Kurbelwelle dreht, angeordnet sein. So kann die Muskelkraft auf Pedale wirken, welche über Kurbeln an der Kurbelwelle befestigt sind, und das auf die Antriebshülse wirkende Drehmoment kann durch Messung von mechanischen Spannungen in der Kurbel oder in den Pedalen bestimmt werden.

Bevorzugt umfasst der Elektroantrieb einen Elektromotor, welcher als Gleichstrom- oder Wechselstrommotor aufgebaut ist und dessen Rotor koaxial zur Antriebshülse angeordnet ist. Durch einen solchen Elektroantrieb bleibt der Aufbau der Antriebseinrichtung kompakt und einfach. Der Elektromotor kann irgendeine geeignete Bauform aufweisen und insbesondere als bürstenloser Elektromotor, als Ringmotor oder als Scheibenläufer-Gleichstrommotor ausgeführt sein.

Alternativ kann der Rotor eines Elektromotors parallel oder senkrecht zur Antriebshülse angeordnet sein und über ein Getriebe mit dieser verbunden sein.

Vorzugsweise ist zwischen dem Elektromotor und der Antriebshülse ein Planetengetriebe angeordnet. Das Übersetzungsverhältnis kann insbesondere derart gewählt sein, dass eine gewünschte Antriebsgeschwindigkeit der Antriebshülse erreicht wird, sodass diese der durch Muskelkraft erzeugten Antriebsgeschwindigkeit der Kurbelwelle entspricht. So beträgt der optimale Betriebsbereich eines Elektromotors typischerweise mehr als 200 Umdrehungen/min., währenddem die durch Muskelkraft eines Menschen erzeugte Drehbewegung typischerweise einen optimalen Bereich von 60-80 Umdrehungen/min. aufweist.

Alternativ wirkt der Elektromotor ohne dazwischenliegendes Getriebe auf die Antriebshülse.

In einer bevorzugten Ausführungsvariante ist zwischen Kurbelwelle und Antriebshülse eine Freilaufeinrichtung vorgesehen, um die bewegungsmässige Kopplung auf eine Antriebsrichtung zu beschränken. Sobald die Kurbelwelle nicht mehr von einer Muskelkraft angetrieben wird, kann diese deshalb zum Stillstand gebracht werden. Wird die Kurbelwelle beispielsweise über Kurbeln und Pedale angetrieben, können die Pedale einfach stillgehalten werden, ohne dass diese beim Einwirken des Elektroantriebs mitgedreht werden.

Alternativ ist kein Freilauf vorgesehen und die Kurbelwelle ist fest mit der Antriebshülse verbunden, wobei beispielsweise zwischen Kurbeln und der Kurbelwelle ein Freilauf vorgesehen ist.

Bevorzugt ist zwischen Elektroantrieb und Antriebshülse eine Freilaufeinrichtung vorgesehen, um die bewegungsmässige Kopplung auf eine Antriebsrichtung zu beschränken. Dadurch kann die Antriebsvorrichtung als eine rein muskelkraft-betriebene Vorrichtung verwendet werden, ohne dass Komponenten des Elektroantriebs unnötigerweise mitgedreht werden müssen.

Alternativ ist kein Freilauf vorgesehen, insbesondere bei einem sehr leichtgängigen Elektroantrieb, bei welchem es nicht oder kaum spürbar ist, dass dieser im abgeschalteten Zustand mitgedreht wird.

Vorzugsweise umfasst das Kupplungselement ein Kettenrad, welches über eine Adapterscheibe lösbar an der Antriebshülse befestigt ist, wobei die Drehung des Kettenrads mit einer Kette insbesondere an das Hinterrad eines Zweirads übertragen wird. Die Adapterscheibe ist dabei auf einen bestimmten Antriebstyp eines Fahrzeugs dimensioniert, sodass ein Nachrüsten von bestehenden Fahrzeugen mit einer erfindungsgemässen Antriebseinrichtung einfach ermöglicht wird. Die kennzeichnenden Bestandteile des Antriebstyps können dabei die Dimensionen der Nabe umfassen oder ob es sich um einen Aussenwechsel, einen Kettenantrieb, einen Riemenantrieb, etc. handelt.

Alternativ ist statt einem Kettenrad ein Riemenrad vorgesehen, welches über einen Riemen das Hinterrad antreibt. Das Kettenrad oder das Riemenrad kann auch direkt ohne die Verwendung einer Adapterscheibe an der Antriebshülse befestigt sein.

Bevorzugt umfasst die Kopplung zwischen der Kurbelwelle und der Antriebshülse eine dehn- oder biegbare Einrichtung, wobei die Dehnung oder Biegung mittels eines oder mehreren Hall-Sensoren, mittels eines Dehnmessstreifens und/oder mittels einer optischen Messung ermittelt und einem zwischen der Kurbelwelle und der Antriebshülse wirkenden Drehmoment zugeordnet wird. Somit kann das durch Muskelkraft auf die Antriebshülse wirkende Drehmoment bestimmt werden, ohne dass dieser Messung das durch den Elektroantrieb erzeugte Drehmoment überlagert ist.

Alternativ sind an der Antriebshülse magnetostriktive Elemente angeordnet, sodass mit einem entsprechenden Sensor die durch Muskelkraft und den Elektroantrieb erzeugte Verdrehung der Antriebshülse gemessen und einem auf die Antriebshülse wirkenden Gesamtdrehmoment zugeordnet werden kann.

In einer Ausführungsvariante sind Sensoren zur Ermittlung von Parametern wie insbesondere einer aktuellen Geschwindigkeit, Beschleunigung oder Neigung des Zweirads oder einem aktuellen Ladezustand einer Batterie sowie eine Steuereinrichtung vorgesehen, wobei am Elektroantrieb durch die Steuereinrichtung eine aus den Parametern berechnete Stromstärke und damit ein elektromotorisches Drehmoment eingestellt wird.

So wird insbesondere das durch die Sensorvorrichtung ermittelte Drehmoment der Steuereinrichtung zugeführt, welche die von einer Batterie an den Elektroantrieb abgegebene Stromstärke steuert. Mit den Sensoren wird in bekannter Weise die aktuelle Geschwindigkeit des Fahrzeugs, die aktuelle Steigung und/oder einen Batterieladezustand ermittelt. Aus diesen Parametern berechnet die Steuereinrichtung eine Stromstärke, welche einem bestimmten Drehmoment entspricht und welches durch den Elektroantrieb abgegeben werden soll, um den Benutzer des Fahrzeugs in gewünschter Weise vom Erzeugen einer Muskelkraft zu entlasten. Die Steuereinrichtung kann dabei eingerichtet sein, dass die vom Elektroantrieb abgegebene Kraft in einem bestimmten Verhältnis zur Muskelkraft steht, oder dass die abgegebene Kraft bei einer Aufwärtssteigung grösser ist als bei einer Abwärtssteigung, oder dass die abgegebene Kraft bei hoher Geschwindigkeit kleiner ist als bei kleiner Geschwindigkeit, oder dass die abgegebene Kraft bei einem tiefen Ladezustand der Batterie kleiner ist als bei einem hohen Ladezustand.

Bevorzugt wird die beschriebene Antriebseinrichtung mit einem Elektroantrieb für ein Zweirad, ein Ergometer oder ein Hometrainer als muskelkraftbetriebenes Fahrzeug verwendet. Im Falle eines Ergometers oder Hometrainers ergeben sich vielseitige Anwendungsmöglichkeiten im Therapie- oder Rehabilitationsbereich.

Beim Zweirad wird dessen Hinterrad als anzutreibende Einrichtung durch die Summe der durch Muskelkraft und durch den Elektroantrieb erzeugten Drehmomente angetrieben. Beim Ergometer oder Hometrainer ist die anzutreibende Einrichtung durch ein Schwungrad oder eine Bremseinrichtung gebildet.

Ein Drehmomentsensor zur Erfassung eines Drehmoments welches von einer Kurbelwelle auf eine Antriebshülse wirkt, wie insbesondere in einer beschriebenen Antriebsvorrichtung, umfasst ein erstes Ringblech und ein zweites Ringblech welche koaxial zur Antriebshülse angebracht sind und welche eingerichtet sind, um insbesondere durch eine optische oder magnetische Messung deren Drehung einem ersten Drehsignal und einem zweiten Drehsignal zuzuordnen. Das erste Ringblech ist auf einem Dehnelement der Antriebshülse fixiert, welches sich entsprechend dem von der Kurbelwelle auf die Antriebshülse wirkenden Drehmoment verbiegt, Das zweite Ringblech ist an der Antriebshülse fixiert. Es wird eine Phasendifferenz zwischen dem ersten und dem zweiten Drehsignal ermittelt, welche dem Drehmoment zugeordnet werden kann.

Das Drehsignal kann durch eine optische Messung erfolgen, indem an den Ringblechen Löcher angebracht sind, sodass mittels einer Lichtquelle und einem Lichtsensor ein Lichtsignal erfasst wird. Alternativ kann das Drehsignal beispielsweise auch durch eine magnetische Messung erfolgen, indem in einem oder mehreren festsitzenden Hallsensoren oder in einer festsitzenden Spule durch an den Ringblechen angebrachten magnetisierten Bereichen ein Signal erzeugt wird. Ein IC-Chip mit Hallsensoren zur Durchführung einer solchen magnetischen Messung ist kommerziell verfügbar.

Das Dehnelement kann durch Stege gebildet sein, welche an der Antriebshülse angebracht sind und auf welche das von der Kurbelwelle erzeugte Drehmoment wirkt, sodass sich die Stege entsprechend verbiegen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: schematisch eine Antriebsvorrichtung für ein Zweirad,
- Fig. 2: schematisch einen Querschnitt durch eine Vorrichtung zur Drehmomenterfassung,
- Fig. 3: schematisch die Aufsicht auf eine Vorrichtung zur Drehmomenterfassung,
- Fig. 4: schematische Darstellung eines Elektroantriebs, und
- Fig. 5: schematische Darstellung eines bevorzugten Elektroantriebs.

Grundsätzlich sind in den Figuren gleiche Teile mit gleichen Bezugszeichen versehen.

### Wege zur Ausführung der Erfindung

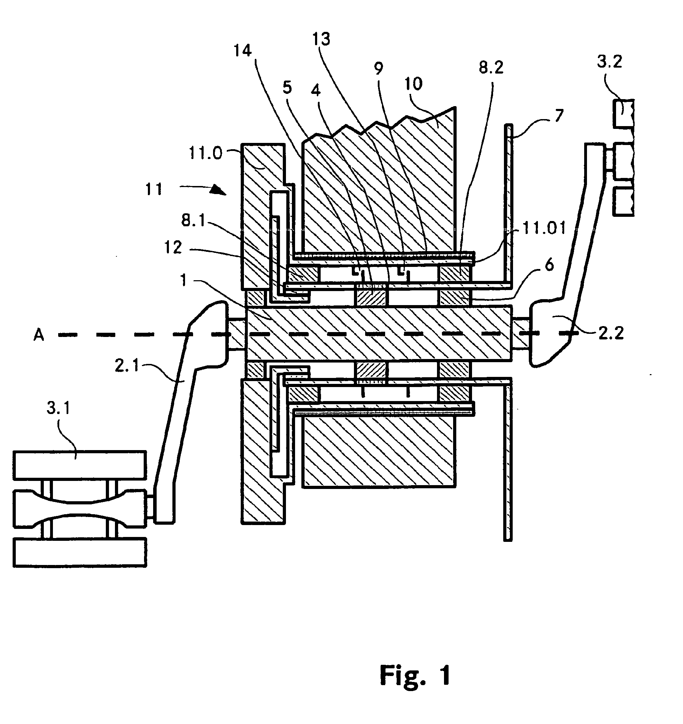

In Figur 1 ist schematisch eine erfindungsgemässe Antriebsvorrichtung für ein Zweirad gezeigt. Die Antriebsvorrichtung ist gegenüber einer Achse A im Wesentlichen axialsymmetrisch aufgebaut. An einer Tretkurbelwelle 1 sind an den Enden die Kurbeln 2.1 und 2.2 angebracht. An den Kurbeln 2.1, 2.2 sind Pedale 3.1, 3.2 angebracht. Diese Muskelkraft wirkt über die Pedale 3.1, 3.2 und die Kurbeln 2.1, 2.2 als Drehmoment auf die Tretkurbelwelle 1. Die Kurbeln 2.1, 2.2 sind mit der Tretkurbelwelle 1 lösbar verbunden und die Pedale 3.1, 3.2 sind mit den Kurbeln 2.1, 2.2 lösbar verbunden. Es sind aber auch Varianten mit festen Verbindungen zwischen den Pedalen 3.1, 3.2 und den Kurbeln 2.1, 2.2 respektive den Kurbeln und der Tretkurbelwelle 1 denkbar.

Die erfindungsgemässe Antriebsvorrichtung umfasst eine Antriebshülse 4, welche über einen Tretkurbelfreilauf 5 und ein inneres Kugellager 6 an der Tretkurbelwelle 1 in einer Drehrichtung drehbar gelagert ist. Der Tretkurbelfreilauf 5 ist eingerichtet, dass bei einem Treten der Pedale 3.1, 3.2 in eine Vorwärtsrichtung das auf die Tretkurbelwelle 1 wirkende Drehmoment an die Antriebshülse 4 übertragen wird. Umgekehrt wird bei einem Treten der Pedale 3.1, 3.2 in eine Rückwärtsrichtung die Tretkurbelwelle 1 in der Antriebshülse 4 frei verdreht, d.h. ohne dass ein Drehmoment von der Tretkurbelwelle 1 an die Antriebshülse 4 übertragen wird. Das innere Kugellager 6 ist eingerichtet, dass sich die Tretkurbelwelle 1 und die Antriebshülse 4 gegeneinander frei verdrehen können.

Die Antriebshülse 4 ist über äussere Kugellager 8.1, 8.2 an einer Einbauhülse 11.01 gelagert. Die Einbauhülse 11.01 ist in der Tretlagerbüchse 9 angebracht, welche am Rahmen 10 des Zweirads fixiert, beispielsweise angeschweisst, ist.

Der Rahmen 10 des Zweirads ist in üblicher Weise ausgeführt und umfasst insbesondere ein Sitzrohr, ein Unterrohr, ein Oberrohr, ein Steuerrohr, eine Kettenstrebe und eine

Sitzstrebe, welche beispielsweise aneinandergeschweisst sind. Die Tretlagerbüchse 9 ist dabei zwischen der Kettenstrebe, dem Sitzrohr und dem Unterrohr angebracht.

An einem Ende der Antriebshülse 4 ist eine Adapterscheibe 7 zum Anbringen eines Kettenblatts angebracht, beispielsweise angeschraubt. Über die an der Adapterscheibe 7 angebrachte Kettenscheibe erfolgt mit einer Kette die Kraftübertragung an das Hinterrad des Zweirads. Beim Treten der Pedale 3.1, 3.2 in die Vorwärtsrichtung wirkt eine Antriebskraft auf das Hinterrad des Zweirads und das Zweirad wird somit vorwärtsbewegt.

Am anderen Ende der Antriebshülse 4 ist ein Elektroantrieb 11 angebracht. Der Elektroantrieb 11 ist eingerichtet, um über einen Antriebsfreilauf 12 eine Antriebskraft als Drehmoment auf die Antriebshülse 4 zu übertragen. Durch den Antriebsfreilauf 12 ist die Antriebshülse 4 gegenüber dem Elektroantrieb 11 in der einen Richtung frei drehbar, sodass bei abgeschaltetem Elektroantrieb 11 die Komponenten des Elektroantriebs 11 bei einer Pedalbewegung nicht mitbewegt werden müssen. In die andere Richtung erfolgt hingegen über den Antriebsfreilauf 12 eine Übertragung eines Drehmoments vom Elektroantrieb 11 an die Antriebshülse 4, womit eine Antriebskraft auf das Hinterrad des Zweirads wirkt. Der Elektromotor 11 umfasst ein Gehäuse 11.0, welches mit der Einbauhülse 11.01 verbunden ist.

Das auf der Antriebshülse 4 erzeugte Drehmoment setzt sich aus dem durch die Muskelkraft des Benutzers erzeugten Drehmoment und dem vom Elektroantrieb 11 erzeugten Drehmoment zusammen, womit sich eine entsprechende Antriebskraft auf das Hinterrad des Zweirads ergibt. Durch eine entsprechende Regelung der Antriebskraft des Elektroantriebs kann somit die Tretkraft des Benutzers des Zweirads stärker oder schwächer unterstützt werden respektive der Benutzer stärker oder schwächer vom Treten entlastet werden.

Der Tretkurbelfreilauf 5 ist an der Antriebshülse 4 derart gelagert, dass das durch die Muskelkraft des Benutzers erzeugte und an die Antriebshülse 4 übertragene Drehmoment gemessen werden kann. Dies kann beispielsweise dadurch erfolgen, dass der Tretkurbelfreilauf 5 an deformierbaren Stegen der Antriebshülse 4 gelagert ist. Mittels Dehnmessstreifen, Hallelementen oder wie in Figur 1 skizziert mittels Lochblechen und LED Sensoren 13, 14 kann die Deformation der Stege und somit das Drehmoment gemessen werden, welches auf die Antriebshülse 4 wirkt. Wie erwähnt kann die Messung der Deformation der Stege auch über Magnetscheiben und IC-Chips mit Hallsensoren erfolgen. Die Einrichtungen zur Messung des Drehmoments werden weiter unten genau beschrieben. Sie haben alle den Vorteil, dass sowohl die Muskelkraft des linken als auch des rechten Beins erfasst werden, und zwar vollkommen unabhängig von dem durch den Elektroantrieb 11 erzeugten Drehmoment.

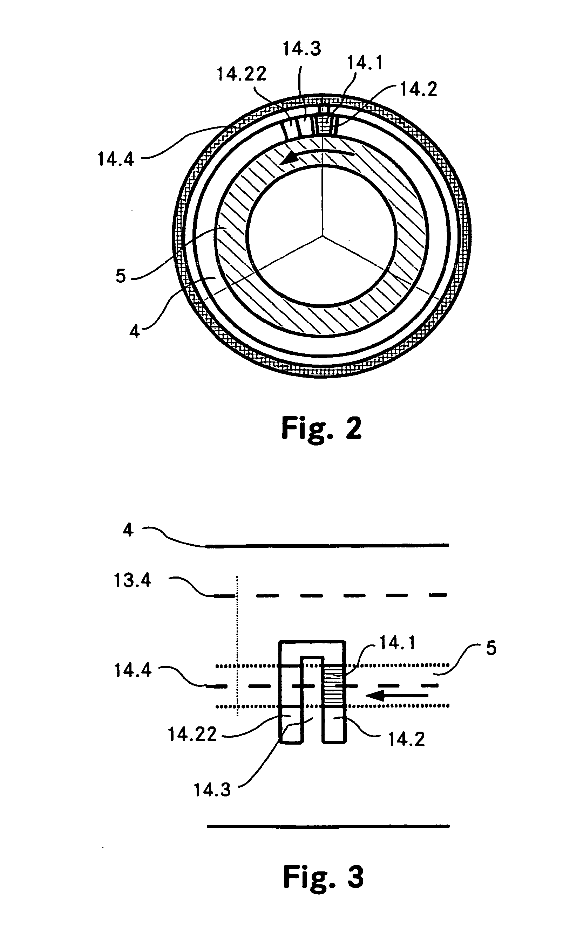

Figur 2 zeigt einen Querschnitt durch die Antriebshülse 4 im Bereich des Tretkurbelfreilaufs 5. Wie in Figur 2 skizziert, sind an drei gleichmässig verteilten Stellen die nachfolgend dargestellten Einrichtungen 14.1, 14.2, 14.22, 14.3 angebracht. In Figur 2 sind nur an einer der erwähnten drei Stellen die nachfolgend dargestellten Einrichtungen skizziert. An den anderen zwei Stellen sind entsprechende Einrichtungen vorgesehen.

Wie in Figur 2 gezeigt, ist an der erwähnten Stelle am Tretkurbelfreilauf 5 ein Nocken 14.1 befestigt, welcher in eine Öffnung 14.2 der Antriebshülse 4 eingreift. An der Antriebshülse 4 ist eine weitere Öffnung 14.22 angebracht, sodass zwischen den erwähnten Öffnungen ein Steg 14.3 besteht. Der Steg 14.3 ist derart dimensioniert, dass dieser bei der Übertragung einer Drehmomentkraft vom Tretkurbelfreilauf 5 auf die Antriebshülse 4 leicht gebogen wird. Am Nocken 14.1 ist auf der Aussenseite der Antriebshülse 4 ein Ringblech 14.4 befestigt, welches in definierten Abständen Löcher oder eine magnetische Polung aufweist.

Figur 3 zeigt eine Aufsicht auf eine der erwähnten Stellen mit den dargestellten Einrichtungen 14.1, 14.2, 14.22, 14.3. Wie aus der Figur 3 ersichtlich ist der Steg 14.3 dadurch gebildet, dass eine hufeisenförmige Öffnung mit den Öffnungen 14.2 und 14.22 in der Antriebshülse 4 angebracht ist. In die Öffnung 14.2 greift der Nocken 14.1 ein, welcher am Tretkurbelfreilauf 5 angebracht ist. Bei der Einwirkung einer Muskelkraft wird der Nocken 14.1 gegen den Steg 14.3 gedrückt, um das entsprechende Drehmoment vom Tretkurbelfreilauf 5 an die Antriebshülse 4 zu übertragen. Dadurch ergibt sich eine Durchbiegung des Stegs 14.3. Am Steg 14.3 ist das Ringblech 14.4 befestigt, welches in regelmässigen Abständen Löcher aufweist. Zudem ist an der Antriebshülse 4 ein weiteres Ringblech 13.4 angebracht, welches ebenfalls Löcher aufweist. Wie in Figur 1 skizziert sind im Bereich der Ringbleche 14.4, 13.4 an der Einbauhülse 11.01 Sensoren angebracht, um ein der gegenseitigen Verdrehung der Ringbleche 14.4, 13.4 entsprechendes Signal zu erzeugen. Dazu umfassen die Sensoren beispielsweise LED Lichtquellen und optische Empfänger, wobei durch die in den Ringblechen angeordneten Löcher und je einen optischen Empfänger im Wesentlichen rechteckförmige Signale erzeugt werden, deren Phasendifferenz der Verdrehung zwischen den Ringblechen 14.4, 13.4 entspricht. Mit einer entsprechenden Kalibrierungstabelle kann die gemessene Phasendifferenz einem Drehmoment zugeordnet werden.

Auf diese Weise kann das Drehmoment in einer Art und Weise gemessen werden, bei welcher alle elektronischen Komponenten gegenüber der Tretlagerbüchse 9 fest angeordnet sind und keine elektronischen Komponenten auf der rotierenden Antriebshülse 4 notwendig sind.

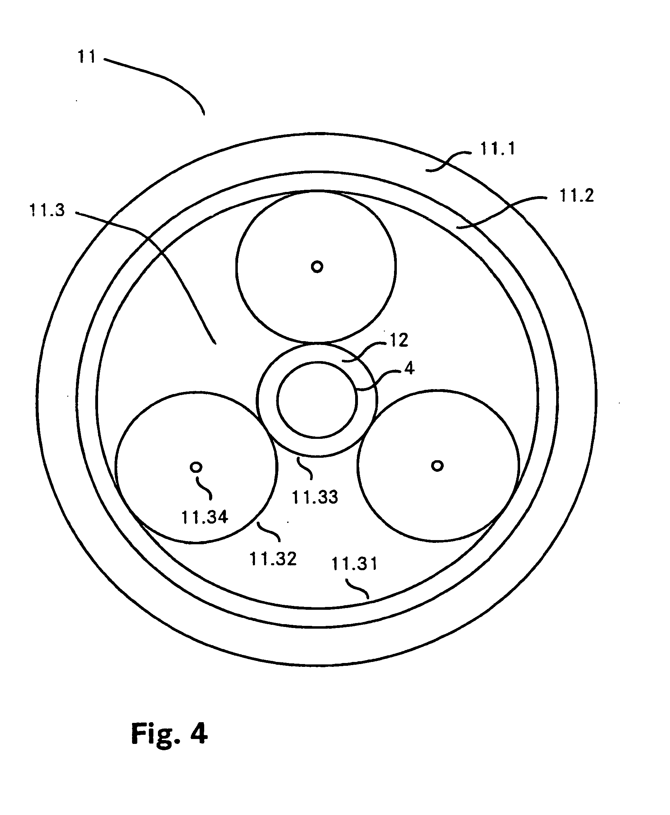

Figur 4 zeigt eine Ausführungsvariante eines Elektroantriebs 11. Der Elektroantrieb 11 umfasst einen aussenliegenden Stator 11.1, einen innenliegenden Rotor 11.2 und ein Planetengetriebe 11.3 zur Kraftübertragung zwischen dem Rotor 11.2 und der Antriebshülse 4.

Der Stator 11.1 und der Rotor 11.2 bilden einen an sich bekannten Ringmotor oder bürstenlosen Ringmotor. Bei einem Ringmotor sind Permanentmagnete im Stator 11.1 angeordnet und über Bürsten erfolgt eine Stromzuführung zu im Rotor 11.2 angeordneten Spulen. Bei einem bürstenlosen Ringmotor sind Permanentmagnete im Rotor 11.2 angeordnet und die Stromzuführung kann ohne Bürsten auf den feststehenden Stator 11.1 erfolgen. Ein Ringmotor hat eine konzentrische Anordnung von Rotor 11.2 und Stator 11.1, wobei der innere Durchmesser beim Rotor 11.2 sehr gross sein kann.

Wie in Figur 4 skizziert, umfasst das Planetengetriebe 11.3 ein Hohlrad 11.31, mehrere Planetenräder 11.32 und ein Sonnenrad 11.33. Die Planetenräder 11.32 sind an Achsen 11.34 gelagert, welche gegenüber dem Stator 11.1 festsitzend angeordnet sind. Das Hohlrad 11.31 ist mit dem Rotor 11.2 fest verbunden oder in den Rotor 11.2 integriert. Das Hohlrad 11.31 weist eine innenliegende Verzahnung auf, welche in entsprechende Verzahnungen der Planetenräder 11.32 eingreift. Die Verzahnungen der Planetenräder 11.32 greifen wiederum in eine entsprechende Verzahnung des Sonnenrads 11.33 ein. Eine Drehung des Hohlrads 11.31 im Uhrzeigersinn führt zu einer Drehung der Planetenräder 11.32 ebenfalls im Uhrzeigersinn und zu einer Drehung des Sonnenrads 11.33 im Gegenuhrzeigersinn.

Zwischen dem Sonnenrad 11.33 und der Antriebshülse 4 ist ein Freilauf angeordnet (in Figur 4 nicht dargestellt), sodass das Drehmoment vom Rotor 11.2 auf die Antriebshülse 4 übertragen wird, jedoch beim Treten der Tretkurbel der Elektroantrieb 11 nicht mitgedreht wird.

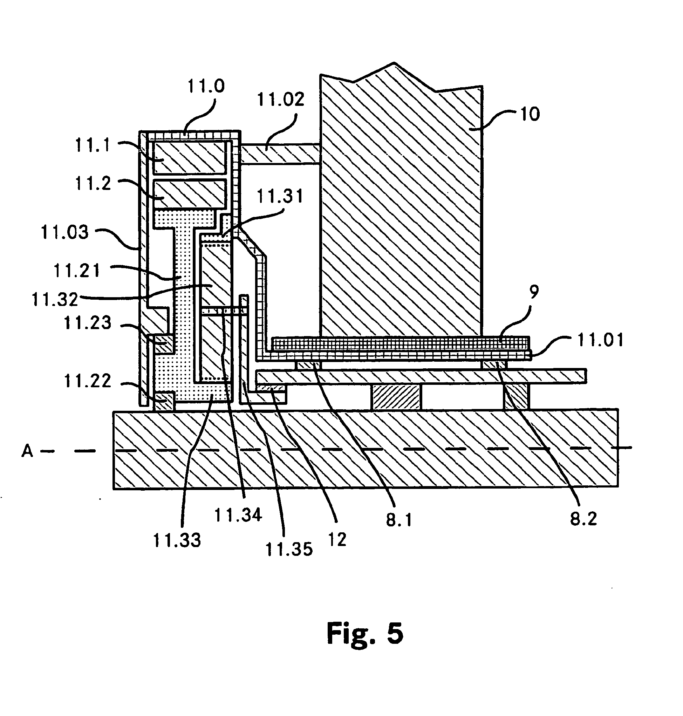

In Figur 5 zeigt sich eine bevorzugte Ausführungsvariante eines Elektroantriebs 11. Der Elektroantrieb 11 ist axialsymmetrisch zu einer Achse A aufgebaut, wobei in Figur 5 nur eine obere Hälfte gezeigt ist. Der Elektroantrieb 11 umfasst ein Gehäuse 11.0, welches eine Einbauhülse 11.01 aufweist. Die Einbauhülse 11.01 ist in der Tretlagerbüchse 9 fixiert, beispielsweise verschraubt. Die Tretlagerbüchse 9 ist wiederum am Rahmenteil 10 angebracht. Das Gehäuse 11.0 ist über eine Verankerung 11.02 mit dem Rahmenteil 10 stabil verbunden.

Der Elektroantrieb umfasst einen Stator 11.1 und einen Rotor 11.2. Der Stator 11.1 ist am Gehäuse 11.0 angebracht, während der Rotor 11.2 mit dem Rotorflansch 11.21 verbunden ist. Der Rotorflansch 11.21 ist mit einem ersten Kugellager 11.22 auf der Tretkurbelwelle 1 und mit einem zweiten Kugellager 11.23 auf dem mit dem Gehäuse 11.0 fixierten Gehäusedeckel 11.03 gelagert.

An einer dem Rotor 11.2 zugewandten Seite ist das Hohlrad 11.31 am Gehäuse 11.0 fixiert. Durch eine der Tretkurbelwelle 1 zugewandte Seiten des Rotorflansch 11.21 wird das Sonnenrad 11.33 gebildet. Zwischen dem Sonnenrad 11.33 und dem Hohlrad 11.31 sind beispielsweise drei Planetenräder 11.32 angeordnet. Durch die Drehung des Rotors 11.2 respektive des Rotorflansch 11.21 werden die Planetenräder 11.32 ebenfalls in eine Drehung versetzt, sodass sich die Achsen 11.34 der Planetenräder 11.32 um die Tretkurbelwelle 1 gemäss einem Übersetzungsverhältnis, welches durch die Durchmesser respektive die Verzahnung des Hohlrads 11.31, der Planetenräder 11.32 und des Sonnenrads 11.33 gebildet ist, herumdrehen. Die Achsen 11.34 sind auf einer Scheibe 11.35 fixiert, welche mit dem Antriebsfreilauf 12 auf der Antriebshülse 4 gelagert ist.

Wie erwähnt ist die Tretlagerbüchse 9 fest mit dem Rahmen 10 des Zweirads verbunden. Gegebenenfalls kann es demontierbar befestigt sein oder als integrales Rahmenteil ausgebildet sein. Die Einbauhülse 11.01 kann an der Tretlagerbüchse 9 über eine Schraubverbindung, eine Steckverbindung, eine Pressverbindung oder in irgendeiner anderen Weise angebracht sein.

Statt den erwähnten Kugellager können alternativ Nadellager oder Gleitlager angebracht sein.

Wie in Figur 1 gezeigt, sind der Tretkurbelfreilaut 5 in einem mittleren axialen Abschnitt der Antriebshülse 4 und der Antriebsfreilauf 12 an einem Ende der Antriebshülse 4 angeordnet. Das innere Kugellager 6 und die äusseren Kugellager 8.1, 8.2 sind an den Enden der Antriebshülse 4 angeordnet. Alternativ können der Tretkurbelfreilauf 5 und/oder das innere Kugellager 6 an irgendeiner anderen Stelle zwischen der Tretkurbelwelle und der Antriebshülse angeordnet sein. Ebenso können die äusseren Kugellager 8.1, 8.2 an irgendeiner anderen Stelle zwischen der Antriebshülse und der Tretlagerbüchse 9 angeordnet sein.

Der Antriebsfreilauf 12 ist gemäss Figur 1 an der Innenseite resp. der Tretkurbel 1 zugewandten Seite der Antriebshülse 4 angebracht. Alternativ kann der Antriebsfreilauf 12 an der Aussenseite der Antriebshülse 4 angebracht sein. In diesem Fall wäre der Elektroantrieb 11 entsprechend anzupassen und gegebenenfalls das äussere Kugellager 8.1 an einer anderen Stelle anzuordnen.

Durch den inneren Freilauf 5 wird es auch ermöglicht, dass der Benutzer des Zweirads auf Muskelkraft vollkommen verzichten kann und der Antrieb des Zweirads vollständig durch den Elektroantrieb gewährleistet ist. Dies kann in einem sehr tiefen Geschwindigkeitsbereich, z.B. bis zu einer Geschwindigkeit von 6 km/h, zu einem einfacheren Anfahren führen, da der Benutzer des Zweirads die Füsse zunächst zum Ausbalancieren benutzen kann und erst bei einer höheren Geschwindigkeit, bei welcher das Zweirad wegen den Rotationskräften der Räder ausbalanciert ist, die Füsse auf die Pedale stellen kann, um eine Tretkraft anzubringen.

Bei einer sehr hohen Geschwindigkeit ist es für den Benutzer unter Umständen schwierig, die Pedale in der notwendigen Umdrehungszahl zu bewegen. Der Antrieb des Zweirads kann in diesem Fall ebenfalls vollständig durch den Elektroantrieb 11 gewährleistet sein, wobei der Benutzer die Füsse bequem auf den Pedalen belassen kann.

Der Tretkurbelfreilauf 5 und/oder der Antriebsfreilauf 12 können z.B. als Sperrklinke (formschlüssig) oder als Klemmkörper (kraftschlüssig) ausgeführt sein.

Statt mittels des Antriebsfreilaufs 12 kann die Scheibe 11.35, das Sonnenrad 11.33 oder der Rotor 11.2 des Elektroantriebs 11 fest mit der Antriebshülse 4 verbunden, also beispielsweise angeschweisst, sein. Eine Freilauffunktion kann in diesem Fall allenfalls durch entsprechende Bauteile des Elektroantriebs 11 gewährleistet sein.

In Figur 2 sind an drei gleichmässig verteilten Stellen Einrichtungen 14.1, 14.2, 14.22, 14.3 angebracht, um das Drehmoment zu erfassen, welches durch Muskelkraft auf die Antriebshülse 4 wirkt. Statt der drei gleichmässig verteilten Stellen kann auch eine andere Anzahl Stellen gewählt werden, beispielsweise 2, 4, 5 oder irgendeine andere Anzahl, wobei diese Stellen auch ungleichmässig verteilt sein können.

Die in Figur 3 hufeisenförmige Öffnung kann stattdessen durch zwei parallele rechteckförmige Öffnungen gebildet sein, sodass der Steg 14.3 zwischen diesen parallelen Öffnungen gebildet ist. Dadurch erfolgt die Durchbiegung des Stegs 14.3 in der Mitte des Stegs statt an dem mit der Antriebshülse 4 verbundenen Ende des Stegs.

Zusammenfassend ist festzustellen, dass eine Antriebseinrichtung mit einem Elektroantrieb für ein muskelkraftbetriebenes Fahrzeug geschaffen ist, welche einfach in ein bestehendes Fahrzeug eingebaut werden kann, wobei nur unwesentliche Modifikationen am Fahrzeug vorgenommen werden müssen.

## Patentansprüche

1. Antriebseinrichtung mit einem Elektroantrieb (11) für eine muskelkraftbetriebene Vorrichtung, insbesondere für ein Zweirad, umfassend
a) eine Kurbelwelle (1), welche durch die Muskelkraft einer Person gedreht werden kann,
b) eine Antriebshülse (4), welche koaxial zur Kurbelwelle (1) gelagert ist, und welche an einem ersten axialen Abschnitt Drehmoment-übertragend mit der Kurbelwelle (1) gekoppelt ist und an einem zweiten axialen Abschnitt Drehmoment-übertragend mit einem Kupplungselement zur Kraftübertragung an eine anzutreibende Einrichtung wie insbesondere ein Hinterrad des Zweirads gekoppelt ist, so dass die Muskelkraft der Person von der Kurbelwelle (1) an die anzutreibende Einrichtung übertragen wird,
c) einen Elektroantrieb (11), welcher in Wirkverbindung mit der Antriebshülse (4) im Bereich eines dritten axialen Abschnitts ist, so dass ein Drehmoment des Elektroantriebes (11) über die Antriebshülse (4) auf das Kupplungselement übertragen werden kann,
d) wobei die Antriebshülse (4) in einer Einbauhülse (11.01) gelagert ist, welche in einer Büchse (9) eines Rahmenteils (10) der muskelkraftbetriebenen Vorrichtung verankert werden kann,
**dadurch gekennzeichnet, dass**
e) das Kupplungselement und der Elektroantrieb (11) auf gegenüberliegenden Seiten der Büchse (9) angeordnet sind.

2. Antriebseinrichtung nach Anspruch 1, **dadurch gekennzeichnet, dass** in der Einbauhülse (11.01) und/oder in der Antriebshülse (4) eine Sensorvorrichtung (13, 14) vorgesehen ist, um das von der Kurbelwelle (1) auf die Antriebshülse (4) wirkende Drehmoment zu ermitteln.

3. Antriebseinrichtung nach Anspruch 1 oder 2, **dadurch gekennzeichnet, dass** der Elektroantrieb (11) einen Elektromotor umfasst, dessen Rotor koaxial zur Antriebshülse (4) angeordnet ist.

4. Antriebseinrichtung nach Anspruch 3, **dadurch gekennzeichnet, dass** zwischen dem Elektromotor und der Antriebshülse (4) ein Planetengetriebe (11.3) angeordnet ist.

5. Antriebseinrichtung nach einem der Ansprüche 1 bis 4, **dadurch gekennzeichnet, dass** zwischen Kurbelwelle (1) und Antriebshülse (4) eine Kurbel-Freilaufeinrichtung (5) vorgesehen ist, um die bewegungsmässige Kopplung auf eine Antriebsrichtung zu beschränken.

6. Antriebseinrichtung nach einem der Ansprüche 1 bis 5, **dadurch gekennzeichnet, dass** zwischen Elektroantrieb (11) und Antriebshülse (4) eine Antriebs-Freilaufeinrichtung (12) vorgesehen ist, um die bewegungsmässige Kopplung auf eine Antriebsrichtung zu beschränken.

7. Antriebseinrichtung nach einem der Ansprüche 1 bis 6, **dadurch gekennzeichnet, dass** das Kupplungselement ein Kettenrad umfasst, welches über eine Adapterscheibe (7) lösbar an der Antriebshülse (4) befestigt ist, wobei die Drehung des Kettenrads mit einer Kette insbesondere an das Hinterrad eines Zweirads übertragen wird.

8. Antriebseinrichtung nach einem der Ansprüche 1 bis 7, **dadurch gekennzeichnet, dass** die Kopplung zwischen der Kurbelwelle (1) und der Antriebshülse (4) eine dehn- oder biegbare Einrichtung umfasst, wobei die Dehnung oder Biegung mittels eines oder mehreren Hall-Sensoren, mittels eines Dehnmessstreifens und/oder mittels einer optischen Messung ermittelt und einem zwischen der Kurbelwelle (1) und der Antriebshülse (4) wirkenden Drehmoment zugeordnet wird.

9. Antriebseinrichtung nach einem der Ansprüche 1 bis 8, **dadurch gekennzeichnet, dass** Sensoren zur Ermittlung von Parametern wie insbesondere einer aktuellen Geschwindigkeit, Beschleunigung oder Neigung des Zweirads oder einem aktuellen Ladezustand einer Batterie sowie eine Steuereinrichtung vorgesehen sind, wobei am
Elektroantrieb durch die Steuereinrichtung eine aus den Parametern berechnete Stromstärke und damit ein Drehmoment des Elektromotors eingestellt wird.

10. Zweirad mit einer Antriebseinrichtung nach einem der Ansprüche 1 bis 9.

11. Ergometer oder Hometrainer mit einer Antriebseinrichtung nach einem der Ansprüche 1 bis 9.

12. Drehmomentsensor in einer Antriebseinrichtung nach einem der Ansprüche 1 bis 9 zur Erfassung eines Drehmoments welches von der Kurbelwelle (1) auf die Antriebshülse (4) wirkt, umfassend:
a) ein erstes Ringblech (14.4) und ein zweites Ringblech (13.4), welche koaxial zur Antriebshülse (4) angebracht sind und welche eingerichtet sind, um durch eine Messung, insbesondere durch eine optische oder magnetische Messung, deren Drehung einem ersten Drehsignal und einem zweiten Drehsignal zuzuordnen,
b) wobei das erste Ringblech (14.4) auf einem Dehnelement der Antriebshülse (4) fixiert ist, welches sich entsprechend dem von der Kurbelwelle (1) auf die Antriebshülse (4) wirkenden Drehmoment verbiegt,
c) wobei das zweite Ringblech (13.4) an der Antriebshülse (4) fixiert ist, und
d) wobei eine Phasendifferenz zwischen dem ersten und dem zweiten Drehsignal ermittelt wird, welche dem Drehmoment zugeordnet werden kann.

## Claims

1. Drive apparatus with an electric drive (11) for a device operated by muscular strength, more particularly for a bicycle, comprising
a) a crankshaft (1) that can be rotated by the muscular strength of a person,
b) a drive sleeve (4), which is mounted coaxially to the crankshaft (1) and which is coupled to the crankshaft (1) in a torque-transmitting fashion in a first axial section and coupled to a coupling element for transmitting power to an apparatus to be driven, such as more particularly a rear wheel of the bicycle, in a torque-transmitting fashion in a second axial section such that the muscular strength of the person is transmitted from the crankshaft (1) to the apparatus to be driven,
c) an electric drive (11), which is operatively connected to the drive sleeve (4) in the region of a third axial section such that torque from the electric drive (11) can be transmitted to the coupling element via the drive sleeve (4),
d) the drive sleeve (4) being mounted in an installation sleeve (11.01), which can be anchored in a liner (9) of a frame part (10) of the device operated by muscular strength, **characterized in that**
e) the coupling element and the electric drive (11) are arranged on opposing sides of the liner (9) .

2. Drive apparatus according to Claim 1, **characterized in that** a sensor device (13, 14) is provided in the installation sleeve (11.01) and/or in the drive sleeve (4) in order to establish the torque from the crankshaft (1) acting on the drive sleeve (4).

3. Drive apparatus according to Claim 1 or 2, **characterized in that** the electric drive (11) comprises an electric motor, the rotor of which is arranged coaxially to the drive sleeve (4).

4. Drive apparatus according to Claim 3, **characterized in that** epicyclic gearing (11.3) is arranged between the electric motor and the drive sleeve (4).

5. Drive apparatus according to one of Claims 1 to 4, **characterized in that** a crank freewheel apparatus (5) is provided between crankshaft (1) and drive sleeve (4) in order to restrict the coupling related to movement to a drive direction.

6. Drive apparatus according to one of Claims 1 to 5, **characterized in that** a drive freewheel apparatus (12) is provided between electric drive (11) and drive sleeve (4) in order to restrict the coupling related to movement to a drive direction.

7. Drive apparatus according to one of Claims 1 to 6, **characterized in that** the coupling element comprises a chainring, which is detachably attached to the drive sleeve (4) via an adapter disc (7), the rotation of the chainring being transmitted, in particular, to the rear wheel of a bicycle using a chain.

8. Drive apparatus according to one of Claims 1 to 7, **characterized in that** the coupling between the crankshaft (1) and the drive sleeve (4) comprises a stretchable or flexible apparatus, the stretching or flexing being established by means of one or more Hall sensors, by means of a strain gauge and/or by means of an optical measurement and associated with a torque acting between the crankshaft (1) and the drive sleeve (4).

9. Drive apparatus according to one of Claims 1 to 8, **characterized in that** provision is made for sensors for establishing parameters such as, more particularly, a current velocity, acceleration or tilt of the bicycle or a current charge state of a battery and provision is also made for a control apparatus, with a current and hence a torque of the electric motor calculated from the parameters being set on the electric drive by the control apparatus.

10. Bicycle with a drive apparatus according to one of Claims 1 to 9.

11. Ergometer or home trainer with a drive apparatus according to one of Claims 1 to 9.

12. Torque sensor in a drive apparatus according to one of Claims 1 to 9, for capturing a torque from the crankshaft (1) that acts on the drive sleeve (4), comprising:
a) a first annular plate (14.4) and a second annular plate (13.4), which have been attached coaxially to the drive sleeve (4) and which are designed to associate the rotation thereof with a first rotation signal and a second rotation signal by means of a measurement, more particularly by means of an optical or magnetic measurement,
b) the first annular plate (14.4) being affixed on a stretching element of the drive sleeve (4), which is bent in accordance with the torque from the crankshaft (1) acting on the drive sleeve (4),
c) the second annular plate (13.4) being affixed on the drive sleeve (4), and
d) a phase difference between the first and the second rotation signal being established, which can be associated with the torque.

## Revendications

1. Dispositif d'entraînement avec un entraînement électrique (11) pour un dispositif mû par la force musculaire, en particulier pour une bicyclette, comprenant
a) un arbre à manivelle (1), qui peut être mis en rotation par la force musculaire d'une personne,
b) une douille d'entraînement (4), qui est montée coaxialement à l'arbre à manivelle (1), et qui est couplée à l'arbre à manivelle (1) à une première partie axiale en transmettant un couple de rotation et qui est couplée à un élément d'embrayage à une deuxième partie axiale en transmettant un couple de rotation pour la transmission de force à un dispositif à entraîner, comme en particulier la roue arrière de la bicyclette, de telle manière que la force musculaire de la personne soit transmise de l'arbre à manivelle (1) au dispositif à entraîner,
c) un entraînement électrique (11), qui est en liaison active avec la douille d'entraînement (4) dans la région d'une troisième partie axiale, de telle manière qu'un couple de rotation de l'entraînement électrique (11) puisse être transmis par la douille d'entraînement (4) à l'élément d'embrayage,
d) dans lequel la douille d'entraînement (4) est montée dans une douille de montage (11.01), qui peut être ancrée dans une bague (9) d'une partie de cadre (10) du dispositif mû par la force musculaire,
**caractérisé en ce que**
e) l'élément d'embrayage et l'entraînement électrique (11) sont disposés sur des côtés opposés de la bague (9).

2. Dispositif d'entraînement selon la revendication 1, **caractérisé en ce qu'**il est prévu dans la douille de montage (11.01) et/ou dans la douille d'entraînement (4) un dispositif de détection (13, 14), afin de déterminer le couple de rotation appliqué par l'arbre à manivelle (1) à la douille d'entraînement (4).

3. Dispositif d'entraînement selon la revendication 1 ou 2, **caractérisé en ce que** l'entraînement électrique (11) comprend un moteur électrique, dont le rotor est disposé coaxialement à la douille d'entraînement (4).

4. Dispositif d'entraînement selon la revendication 3, **caractérisé en ce qu'**un engrenage planétaire (11.3) est disposé entre le moteur électrique et la douille d'entraînement (4).

5. Dispositif d'entraînement selon l'une quelconque des revendications 1 à 4, **caractérisé en ce qu'**il est prévu entre l'arbre à manivelle (1) et la douille d'entraînement (4) un dispositif à roue libre à manivelle (5) pour limiter l'accouplement correspondant au déplacement à une direction d'entraînement.

6. Dispositif d'entraînement selon l'une quelconque des revendications 1 à 5, **caractérisé en ce qu'**il est prévu entre l'entraînement électrique (11) et la douille d'entraînement (4) un dispositif à roue libre d'entraînement (12) pour limiter l'accouplement correspondant au déplacement à une direction d'entraînement.

7. Dispositif d'entraînement selon l'une quelconque des revendications 1 à 6, **caractérisé en ce que** l'élément d'embrayage comprend une roue à chaîne, qui est fixée de façon amovible à la douille d'entraînement (4) au moyen d'un disque d'adaptateur (7), dans lequel la rotation de la roue à chaîne est transmise avec une chaîne en particulier à la roue arrière d'une bicyclette.

8. Dispositif d'entraînement selon l'une quelconque des revendications 1 à 7, **caractérisé en ce que** l'accouplement entre l'arbre à manivelle (1) et la douille d'entraînement (4) comprend un dispositif extensible ou flexible, dans lequel l'extension ou la flexion est déterminée au moyen d'une ou de plusieurs sondes de Hall, au moyen d'un extensomètre et/ou au moyen d'une mesure optique, et est associée à un couple de rotation agissant entre l'arbre à manivelle (1) et la douille d'entraînement (4).

9. Dispositif d'entraînement selon l'une quelconque des revendications 1 à 8, **caractérisé en ce qu'**il est prévu des détecteurs pour déterminer des paramètres comme en particulier une vitesse actuelle, une accélération ou une inclinaison de la bicyclette ou un état de charge actuel d'une batterie ainsi qu'un dispositif de commande, dans lequel une intensité de courant et dès lors un couple de rotation du moteur électrique, calculé à partir des paramètres, est réglé à l'entraînement électrique par le dispositif de commande.

10. Bicyclette munie d'un dispositif d'entraînement selon l'une quelconque des revendications 1 à 9.

11. Ergomètre ou home-trainer muni d'un dispositif d'entraînement selon l'une quelconque des revendications 1 à 9.

12. Détecteur de couple de rotation dans un dispositif d'entraînement selon l'une quelconque des revendications 1 à 9 pour la détermination d'un couple de rotation, qui est appliqué par l'arbre à manivelle (1) à la douille d'entraînement (4), comprenant:
a) une première tôle annulaire (14.4) et une deuxième tôle annulaire (13.4), qui sont placées coaxialement à la douille d'entraînement (4) et qui sont conçues pour associer leur rotation à un premier signal de rotation et à un deuxième signal de rotation, par une mesure, en particulier par une mesure optique ou magnétique,
b) dans lequel la première tôle annulaire (14.4) est fixée sur un élément extensible de la douille d'entraînement (4), qui se courbe en fonction du couple de rotation exercé par l'arbre à manivelle (1) sur la douille d'entraînement (4),
c) dans lequel la deuxième tôle annulaire (13.4) est fixée sur la douille d'entraînement (4), et
d) dans lequel on détermine une différence de phase entre le premier et le deuxième signal de rotation, qui peut être associée au couple de rotation.
